# EUROPEAN PATENT APPLICATION

(11) **EP 2 498 455 A1**
(43) Date of publication of application: **12.09.2012**
(21) Application number: 11157732.6
(22) Date of filing: 10.03.2011
(51) Int. Cl.: H04L 12/56, H04W 72/00, H04W 74/08, H04L 12/417, H04L 12/403

(54) **Method and system to coordinate the communication channel access in a technology independent way in order to improve channel efficiency and to provide QoS guarantees**

(71) Applicant: Deutsche Telekom AG, 53113 Bonn (DE); Technische Universität Berlin, 10623 Berlin (DE)
(72) Inventor: Sivchenko, Dimitri, 64285 Darmstadt (DE); Bayer, Nico, 61231 Bad Nauheim (DE); Thiel, karl, 64319 Pfungstadt (DE); Sengul, Cigdem, 10825 Berlin (DE); Martinez Olmo, Maria Carolina, 28224 Madrid (ES); Eznarriaga Barranco, Lucas, 28005 Madrid (ES)
(74) Representative: Vossius & Partner

(57) **Abstract**

The present invention relates to a method and system to coordinate the communication channel access in a technology independent way in order to improve channel efficiency and to provide QoS guarantees by comprising a master that collects traffic demands from a plurality of slaves within a token based access approach. Transmission opportunities are assigned by the master to the plurality of slaves by means of scheduling algorithms. Additional traffic related information of the slaves such as priority considerations of traffic queues or any other scheduling relevant information such as an overarching resource coordination function may be taken into account. The invention specifically overcomes the tight synchronization requirement of time division multiple access systems while still providing a flexible and efficient way of coordinating channel access.

## Description

### Technical Field

The present invention relates to a method and system to coordinate the communication channel access in a technology independent way in order to improve channel efficiency and to provide QoS guarantees. The invention specifically relates to a method of a token-based channel access coordination in a communication system that is independent of the underlying architecture and can be implemented on top of an existing, preferably wireless, communication system.

### Background Art

In the last years, wireless networks became more and more popular. Among the set of wireless technologies the IEEE 802.11 (WLAN) standard is commonly used to set up wireless local area networks and it is typically supported by all mobile devices. However, IEEE 802.11 is known to have scalability problems, e.g. face performance degradation, when many stations connect to a single access point (AP). In G. Bianchi, "Performance analysis of the IEEE 802.11 distributed coordination function", Selected Areas in Communications, IEEE Journal on, vol. 18, no. 3, pp. 535. , it is shown that due to the random access mechanism used in the IEEE 802.11 standard the maximum saturation throughput decreases with the increasing number of contending nodes. This can be simply explained by the fact that increasing the number of contending stations increases the collision probability, which in turn causes high number of packet re-transmissions and thus, reduced network performance. Especially, the unpredictable nature of collisions makes QoS provisioning in such networks difficult to achieve. In Tzu-Jane Tsai and Ju-Wei Chen, IEEE 802.11 MAC protocol over wireless mesh networks: problems and perspectives, Advanced Information Networking and Applications, 2005. AINA 2005, volume 2, pages 60-63, 2005, the authors state that the contention based access of IEEE 802.11 is the main weakness for transmitting real-time multimedia traffic. The basic exponential backoff mechanism for accessing the channel in IEEE 802.11 has been extended with a rudimentary QoS support in the IEEE 802.11e standard. Its main idea is the introduction of multiple queues for packets of different priority. For the transmission of packets from different queues different contention intervals are used, i.e. the packets of a higher priority are transmitted by a station earlier. However, the IEEE 802.11e does not eliminate the collision possibility due to the exponential backoff access mechanism so that the guaranteed QoS support cannot be provided by using IEEE 802.11e.

A further problem of IEEE 802.11 based networks is interference. Interference is typically caused by parallel transmissions of different nodes in the same or in the neighbouring channels. Interference problems are very typical for WLAN based mesh (or multi-hop) networks. Interference causes an increased error rate for incoming packets at the receiver that may lead to additional packet drops.

There exist wireless technologies with native QoS support. One example is the WiMAX (IEEE 802.16) standard. WiMAX is a TDMA based system in which channel access is coordinated by a central entity. As in all TDMA systems, a tight synchronisation among nodes is required, which dramatically increases the system complexity.

### Disclosure of the invention

It is the objective of the present invention to provide a method for coordinating channel access in a communication system using a respective access technology and a respective system and apparatuses used in the system having an improved channel efficiency and providing quality of service guaranties.

This objective is achieved with the features of the independent claims. The dependent claims relate to further aspects of the present invention.

One aspect of the present invention relates to a method for coordinating channel access in a communication system using a respective access technology, preferably a wireless communication system. This communication system comprises a master and at least one slave wherein the master can be realized for example in a router in a local area network and wherein the slave can be realized in any type of devices which are connected to the router via the local area network. In a wireless communication system for example according to the IEEE 802.11 (WLAN) standard mobile devices acting as slaves can be connected to a WLAN-router acting as a master. The method according to the present invention is used independent of the underlying access technology and comprises the steps of collecting at the master traffic demand of said at least one slave as well as additional scheduling relevant information and assigning at the master transmission opportunities for said at least one slave, wherein a token is used for coordinating a channel access.

The present invention is based on the concept of using a token for coordinating a channel access. More specifically, a SoftToken is used in a system to implement coordinated channel access. The SoftToken is implemented as a software module on top of an existing WLAN technology. In the system according to the present invention a master comprises a specific software module and each of the slaves comprises a specific other software module which are described herein in more detail. A token is used to collect information about traffic demands from the slaves and to assign transmission opportunities by the master to the slaves. The token-based approach relaxes the need for tight synchronization or even removes the need for tight synchronization between different network nodes.

The present invention using a SoftToken can be integrated in an existing WLAN without causing interference. The integration can be done in such a way that SoftToken has the same priority as standard WLAN stations or that SoftToken controls also the transmissions of standard WLAN stations.

For the first approach SoftToken master with its associated SoftToken slave will just be another competitor for the channel resource with the normal WLAN nodes. Normally, while a SoftToken node is transmitting, other nodes whether SoftToken or not should backoff, since they will sense the channel busy. If the transmission beginning times of a SoftToken node and other WLAN nodes coincide, there would be a collision. Then, SoftToken will react to this by backing off, and trying again. This of course will disturb the schedule of SoftToken and should be avoided. Hence, it is preferred that SoftToken is operating on a channel not used by normal WLAN stations.

In the second approach messages within the SoftToken cycle can be transmitted without CW and with a smaller interframe spacing time than normal data in WLAN. This ensures that SoftToken transmissions have a higher priority compared to normal WLAN transmissions. Hence, in this approach normal WLAN stations will not interfere with standard WLAN transmissions as normal WLAN stations are only allowed to transmit if the SoftToken master grants it.

The present invention using a SoftToken is preferably applied in wireless communications with an arbitrary topology, a centralized management and a token passing between master and slaves.

A further aspect of the present invention relates to an apparatus for coordinating channel access in a communication system using a respective access technology, preferably a wireless communication system wherein said apparatus is implemented as a master. Said apparatus preferably uses a method as described herein. The apparatus comprises collecting means for collecting a traffic demand of at least one slave as well as additional scheduling relevant information and assigning means for assigning transmission opportunities for said at least one slave, wherein a token is used for coordinating a channel access. According to a specific aspect of the present invention this apparatus is implemented by using SoftToken modules which are arranged between an IP layer and a wireless card driver. The SoftToken master comprises a SoftToken coordinator being connected to a scheduler which collects traffic demands of slaves as well as additional scheduling relevant information and which assigns transmission opportunities for the slaves. For the respective communication between the master and one slave a token is used which is generated by the master and forwarded to the slave and wherein said token is returned from said slave to the master.

Another aspect of the present invention relates to an apparatus for coordinating channel access in a communication system using a respective access technology, preferably a wireless communication system, wherein said apparatus is implemented as a slave.

This apparatus is implemented with SoftToken modules comprising a SoftToken controller and a SoftToken client. In an embodiment of the present invention the SoftToken modules of a SoftToken slave are arranged between an IP layer and a wireless card driver.

According to a further aspect of the present invention an apparatus for coordinating channel access in a communication system using a respective access technology, preferably a wireless communication system comprises a SoftToken master collocated with a SoftToken slave. Another aspect of the present invention relates to a system for coordinating channel access in a communication system using a respective access technology, preferably a wireless communication system comprising one SoftToken master or a SoftToken master collocated with one SoftToken slave and at least one SoftToken slave, preferably a plurality of SoftToken slaves.

The proposed system offers the following advantages:
● Deterministic channel access that enables QoS support
● Simple software-based solution that does not require any hardware changes
● Increased channel efficiency by avoiding packet collisions and interference
● No need for tight synchronization

One major benefit of the proposed invention in comparison to other token-based approaches is the independence from the underlying access technology and hardware. The implementation can be done as a usual system driver so that the required modules can be distributed among clients independently of the used WLAN driver and operating system.

As collisions and interference are caused by multiple stations transmitting simultaneously, the proposed solution is exploited if there are multiple slaves in the network. A slave is a node that can transmit useful packets, i.e. the node that needs to get the access to the channel for data transmission. The master can either be collocated with one slave in the network or be a separate node. In the case the master is not collocated with a slave, the master will send and receive only the token packets introduced by this approach. The master is the central entity that coordinates the channel access of the slaves. The coordination is done via new signalling between master and slaves. This signalling is done based on token messages. Only the slave that owns the token is allowed to access the channel for packet transmission. If the slave gets packets for transmission when it does not have the token, they are stored in at least one associated packet queue of the slave.

Multiple packet queues may exist in each slave for QoS differentiation. Along the token master and slave nodes can transmit additional information. Two new messages are introduced. The "request" message is sent together with the token (token+request) from the master to a slave and requests the slave to inform the master about the amount of data the slave needs to transmit. Additionally, it signals to the slave the amount of data the slave is allowed to transmit before it has to pass the token back to the master. In response to the token+request, the slave sends the "reply" together with the token (token+reply) to the master when it is done with its data transmission. The token+reply comprises information about the additional traffic demand of the slave. Optionally, the token+reply further comprises also the information about transmitted data within the current cycle. Different token-passing strategies can be used when passing the token from the master to the slaves, e.g., round robin. Different QoS classes can be supported by the proposed mechanism as the information about the amount of data to transmit is queue-based. For example if there are multiple packet queues for different QoS priorities on slaves, the request and reply messages will contain data for all of these queues. There is at least one packet queue on each slave if there is no QoS differentiation in the network. SoftToken can be applied in single-hop as well as in multi-hop networks. If used in a multi-hop network the token passing from the master to a slave that is more than one hop away is handled by including into the token message information about the route that the token should follow. For example if a Slave C is 2 hops away from a Master A and can only be reached via a Slave B, the Master adds information to the token messages telling B that it should not directly send the response back to A but forward it to its direct neighbour C. C will then add its information to the token and send it to A via B. In that case, A will receive the token including information not only about a single Slave (as in the single-hop case) but about B and C.

Therefore, the concept of this invention makes use of a token based channel access mechanism whereby transmission from a slave to any other slave directly or via one or more intermediate slaves is coordinated by a master based on information communicated to the master from one or more slaves whereby the information is processed in a scheduling algorithm and contains at least the traffic demand of one or more slaves and may contain additional information on which scheduling decisions may be based on in that the entire mechanism is independent of the underlying architecture and thus may be implemented on top of any existing one.

### Brief Description of the Drawings

The method, apparatuses and the related system according to the invention are described in more detail herein below by way of exemplary embodiments and with reference to the attached drawings, in which:
- Figure 1: shows a SoftToken master collocated with a soft token slave;
- Figure 2: shows a SoftToken slave;
- Figure 3: shows a SoftToken signalling embedded into IEEE 802.11 access mechanism;
- Figure 4: shows a soft token implementation in a multihop network; and
- Figure 5: shows a possible compilation of SoftToken messages.

### Embodiment of the invention

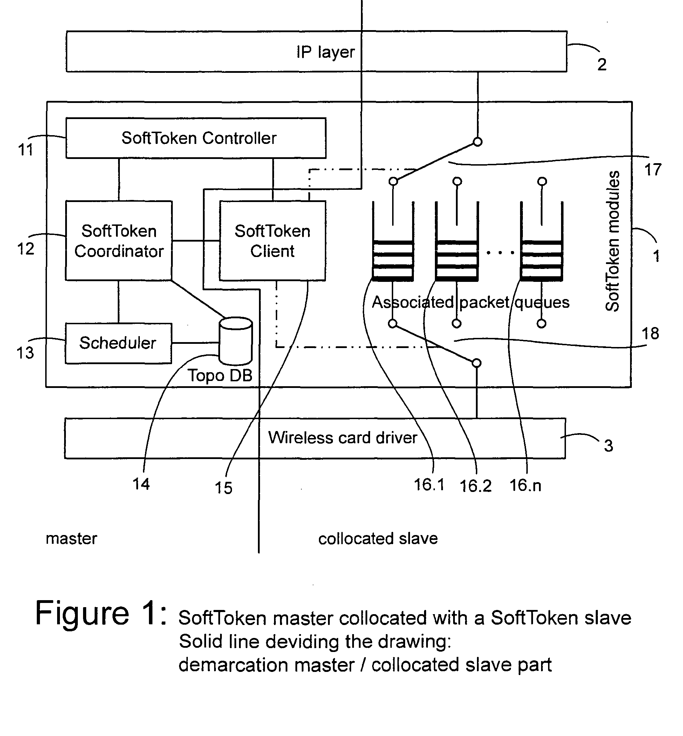

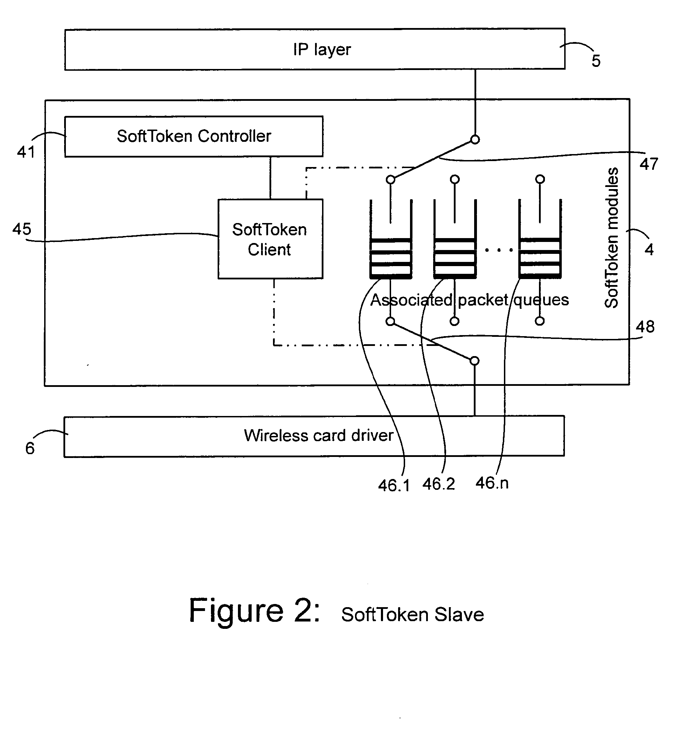

One embodiment of a SoftToken architecture as well as its integration into a communication architecture of a physical node is depicted in Figure 1 and Figure 2. Figure 1 shows a SoftToken Master collocated with a SoftToken Slave 1. The SoftToken architecture itself comprises four main parts: a, "SoftToken Controller" module 11, a "SoftToken Client" module 15, a "SoftToken Coordinator" module 12 and a "scheduler" module 13. As shown in Figure 1 the SoftToken Controller 11 is connected to the SoftToken Coordinator 12 and to the SoftToken Client 15. The SoftToken Coordinator 12 is connected to the Scheduler 13. The SoftToken Coordinator and the Scheduler are connected with a topology Database 14. The SoftToken Client 15 has several packet queues 16.1, 16.2 to 16.n associated to it. Those associated packet queues 16 are connected to an IP layer 2 via a first switch 17 as well as a wireless card driver 3 via a second switch 18. The SoftToken Client 15 implements the switching functionality of the first and second switch 17 and 18.

Figure 2 shows the SoftToken Slave 4. In this case the SoftToken architecture itself comprises two parts: a "SoftToken Controller" module 41 and a "SoftToken Client" module 45. As shown in Figure 2 the SoftToken Controller 41 is connected to the SoftToken Client 45. The SoftToken Client 45 is implemented with several packet queues 46.1, 46.2 to 46.n associated to it. The associated packet queues 46 are connected to an IP layer 5 via a first switch 47 as well as a wireless card driver 6 via a second switch 48. The SoftToken Client 45 implements the switching functionality of the first and the second switch 47 and 48.

The "SoftToken Client" module 45 is implemented at each slave along with packet queues 46. Every queue is associated with a specific traffic class (TC) to perform resource allocation on a TC granularity. The SoftToken Client has three main tasks:
● Classification of outgoing data packets in order to place them into the right queues 46.1 to 46.n. Different methods for classification can be used, e.g., based on the Type of Service (TOS) field in the IP header or based on MPLS labels.
● Controls the submission of data packets from the different queues to the wireless network interface 6 according to the information received within the token+request message via the second switch 48.
● Processing the token+request message and passing the token back (after the data transmission ends) along with the information about additional traffic demands. For this, the client needs to monitor the number of packets/bytes in each queue.

The advantage of a slave embodied like this is that transmission opportunities may be assigned according to priority considerations.

The "SoftToken Coordinator" module 12 needs to be implemented only at the master and is responsible for the coordination of the token among the slaves. For this reason, it is connected to the topology database 14 which maintains a list of slaves to serve. For the multi-hop case the topology database also contains information about the topology such that the master is able to send messages to nodes more then one hop away. This information can be obtained example from the multi-hop routing protocol.

The SoftToken coordinator 12 collects the traffic demands from the slaves which are received within token+reply messages and passes this information to the scheduler module. In addition to that the scheduler could also receive traffic demand information from higher layer functions. For instance an overarching resource coordination function could perform a resource allocation in that way, not shown in the drawing.

Based on the traffic demand received from the slaves via token+reply messages and the optional demand information from higher layers, the scheduler module 13 computes a resource allocation table and provides it to the coordinator 12, which then signals this information within the token+request message to the clients.

To cope with any transmission uncertainties over the wireless medium, the coordinator 12 preferably comprises a retransmission timer in order to decide when a token has been lost. For instance, this can happen due to the interference from other sources. The following situations are possible:
● Lost token: If after a specific timeout the master did not receive the token back from the slave, the master assumes that the token has been lost. In response, a new token is generated by the master.
● Delayed token: If the token is received by the master after the master has assumed that the token has been lost, the token needs to be ignored. To detect those situations, every token preferably has a sequence number associated to it, which is used to uniquely identify tokens.

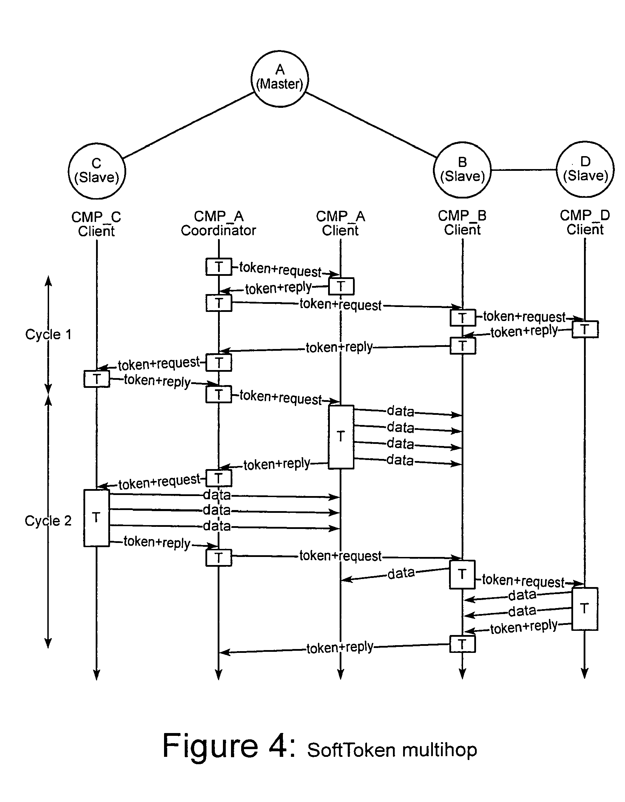

Different algorithms may be applied on the coordinator module 12 at the master to pass tokens to the client modules of slaves. For instance, if a slave is inactive, i.e. does not signal to the master any demands for packet transmission for a long time, the token+request message does not need to be sent to this slave during each cycle of the transmission. A cycle of the transmission includes transmissions from all demanding slaves managed by the master, see Figure 4. If a cycle takes a longer time, which may happen if the master serves a big number of slaves, token+request signalling can be sent to particular slaves to update their demands on the master without assigning resources for any data packet transmissions to these slaves.

The advantage of the master embodied with said soft token coordinator is the integration of an overarching resource coordination function for processing traffic demands as well as a mechanism to cope with lost or delayed tokens.

The "Scheduler" module 13 is the entity that computes the resource allocation table. This is the table that contains detailed information about the sharing of resources among the different slaves and the different traffic classes. Therefore, the scheduler uses the traffic demand information received as input. Different calculation algorithms may be used by the scheduler 13 to distribute the resources between requesting slaves. For the resource allocation it might be important to have additional information for example about the link quality, etc. Therefore, the scheduler is connected to the topology database 14 in which such information is stored. The advantage of a master embodied with a separate scheduler module like this is that the different scheduling algorithms can be used interchangeably dependent on the environment.

The "SoftToken Controller" module 11 serves as a configuration and monitoring interface to the other modules. For instance it is used to monitor the number of packets per queue, to configure the traffic classification or to configure the scheduler.

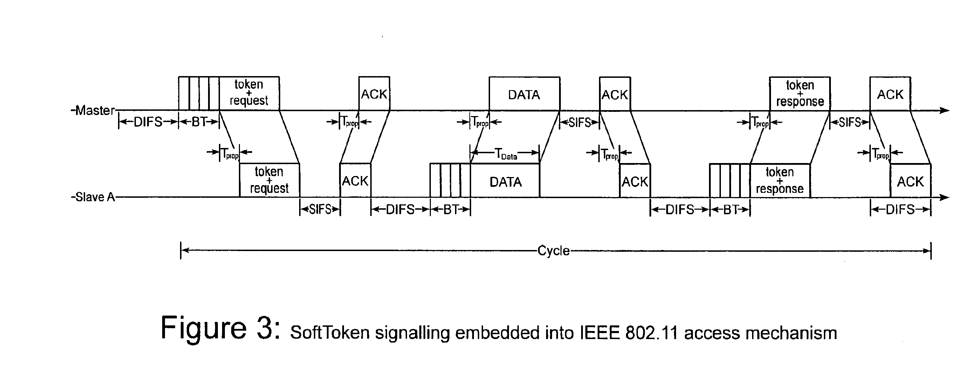

In one embodiment the SoftToken method and system may be integrated into IEEE 802.11 access mechanism as shown in Figure 3. SoftToken signalling messages are implemented as usual Ethernet frames and therefore are seamlessly integrated into the access mechanism of the IEEE 802.11 standard. As SoftToken coordinates the channel access the performance of the system can be improved by switching off the carrier-sense mechanisms of 802.11.

In Figure 3 two time lines are depicted, the upper one for the master the lower one for the slave A. First after a distributed coordination function interframe spacing (DIFS) plus a randomly selected backoff time (BT) the master transmits a token+request message to the slave A which is received after a propagation delay of T_prop. The slave then acknowledges after the short inter-frame spacing (SIFS) time the receipt of that message and after the DIFS time transmits an amount of data to the master for the duration of T_data which is received at the master after a propagation delay of T_prop. The master then acknowledges the receipt of that amount of data after the SIFS time. Next, slave A sends a token+reply back to the master after a DIFS time and BT. Finally, the master acknowledges the correct reception of the token+reply message after a SIFS time.

One embodiment of a system comprising four IEEE 802.11 nodes is shown in Figure 4. Node A is configured as the master collocated with the slave, while node B, C and D act as slaves. Node D is two hops away from node A. The vertical axis depicts the time, specifically the transmission time. The owner of the token is marked by a square with a "T". It is assumed that the whole communication process has just started and that the Coordinator on the master does not have any information about the traffic demands of the slaves. In the first step (cycle 1), the master sends a token+request to all slaves one after the other including the collocated slave in order to request information about traffic demands. In this initial request, no resources are assigned to the slaves. To reach node D, the master adds information into the token+request message indicating, that B should not directly reply to the master but forward the token+request message to D first. After D has processed the token+request message it replies with the token+reply directly to B which then forwards the message to the master.

After all token+reply messages have been received; the scheduler module at the master computes the resource allocation table. Based on the resource allocation table, in the next step (cycle 2), the Coordinator module 12 on the master assigns resources to slaves using the token+request message along with the information about how much data a slave is allowed to transmit. After the slave has finished the data transmission, it sends the token back including information about its further traffic demand.

In cycle 2 the master A sends a token+request to collocated slave A with assignment to send a specific amount of data. Then, the collocated slave A returns a token+reply that contains additional traffic demand as well as other relevant scheduling information to master A. At next master A sends a token+request to slave C with an assignment to send a specific amount of data. When done, slave C returns a token+reply to master A. Then, master A sends a token+request to slave B with an assignment to send a specific amount of data as well as an assignment to pass the token+request to slave D. The token+request transmitted from slave B to slave D contains an assignment for slave D to send a specific amount of data as well as to return a token+reply to master A via slave B.

Besides, there are different strategies on when to re-calculate the resource allocation table. It can be computed after every token+reply message received by the master or it could be computed after a complete cycle.

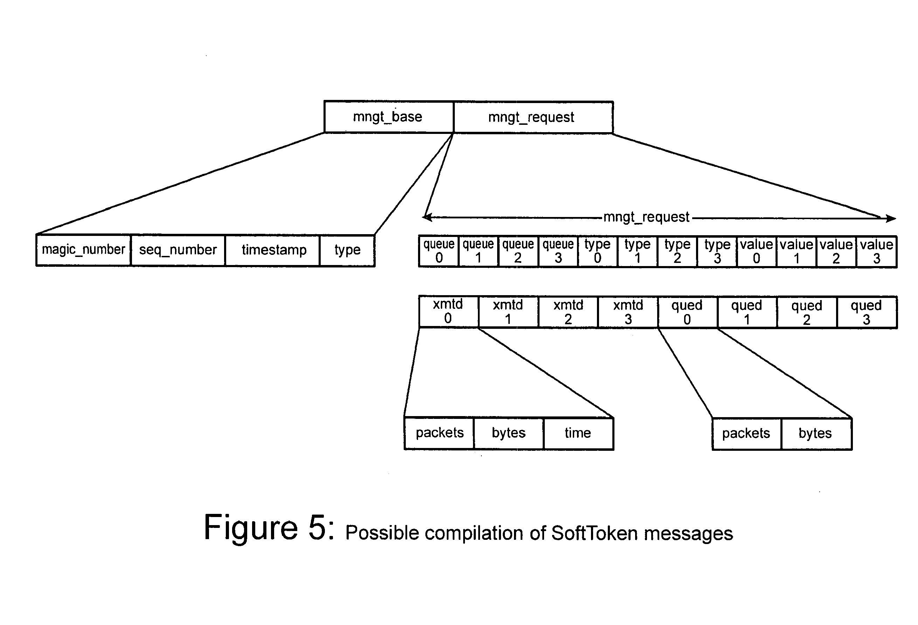

Figure 5 illustrates a possible compilation of softtoken messages. It should be noted that this is only one example of a token structure and that different structures could be implemented. All softtoken management messages start with a mngt_base which represents the token. The mngt_base comprises the four fields "magic_number", "seq_number" , "timestamp" and "type". The "magic_number" field is used to check if the packet belongs to the SoftToken protocol. The "seq_number" identifies a request - response cycle. It is increased by one for every new cycle. The "timestamp" field is currently not used and set to 0. The "type" field identifies which mngt_message follows the mngt_base. Currently, two messages are defined: "mngt_request" and "mngt_response".

The "nmgt_request" is used to signal to a slave the amount of data it is allowed to transmit. The "mngt_request" comprises the fields "queue", "type" and "value". The amount of data can be expressed in different formats: number of packets, number of bytes or the amount of time for which the slave is allowed to access the channel. Which format is used is encoded in the "type" field of the request message. Each "queue" field contains the number of the queue to which the resource allocation refers. Each "value" field indicates the value of the resource allocation for the corresponding queue and of the corresponding type.

The "mngt_response" signals the transmitted data which has been transmitted within the actual cycle, encoded within the "xmtd" field for each queue. It also signals the amount of data which is queued in a node by SoftToken, waiting for the token to be transmitted, encoded within the "qued" field for each queue.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims.

## Claims

1. Method for coordinating channel access in a communication system using a respective access technology, preferably a wireless communication system, comprising a master and at least one slave, wherein the method independent of the underlying access technology comprises the steps of:
collecting at a master a traffic demand of said at least one slave as well as additional scheduling relevant information and
assigning at the master transmission opportunities for said at least one slave,
wherein a token is used for coordinating a channel access.

2. Method of claim 1, further comprising the steps of:
(a) transmitting a token and a state request message from the master to one of a plurality of slaves,
(b) receiving at the master said token and a state reply message from said slave, and
(c) optionally repeating the steps (a) and (b) for at least one further slave of said plurality of slaves, wherein preferably the token comprises a sequence number or wherein every token comprises a unique identifier.

3. Method of claim 1 or 2, wherein the step of assigning transmission opportunities to the slave is performed by using a scheduling algorithm, wherein scheduling decisions are based on collected traffic demands as well as further scheduling relevant information which are obtained by collecting information from at least one slave or receiving information from a higher layer module.

4. Method of any of claims 1 to 3, further comprising the steps of:
(d) transmitting a token and a request message from the master to one of a plurality of slaves, wherein said request message comprises information with respect to resource allocation assigned to said slave,
(e) receiving at the master data from said slave in correspondence to the resource allocation and said token, and
(f) optionally repeating steps (d) and (e) for at least one further slave.

5. Method of any of claims 1 to 4, wherein the state reply message comprises at least one information or two information or all information from the following group comprising an amount of data to be transmitted from the slave, a type of data to be transmitted from the slave, a priority of data to be transmitted from the slave, different quality of service classes for multiple packet queues on the slave and further scheduling relevant information.

6. Method of any of claims 2 to 5, wherein the communication system comprises a multi-hop network and wherein:
in steps (a) and (d) the master sends said token and said state request message together with information about the route that the token should follow, preferably designating at least one slave which forwards the token and the state request message or the token and
the request message to a specific slave of said plurality of slaves, and
in steps (b) and (e) the master receives the token and said state reply message or the data and said token from said specific slave via said at least one designated slave.

7. Method of claim 6, wherein the master comprises a topology database, further comprising the step of:
maintaining a list of slaves which are served by the master.

8. Method of any of claims 2 to 7, further comprising the steps of:
watching whether within a predetermined time after transmitting a token and a state request message or after transmitting a token and a request message from the master to the slave, a response is received from the slave,
if no response is received from the slave, retransmitting at least one time the previously transmitted token and state request message or token and request message from the master to the slave.

9. Method of any of claims 1 to 8, further comprising the steps of storing the time of last activity of any slave,
determining whether a slave is inactive and
transmitting a token and a state request message from the master to any active one of the plurality of slaves.

10. Method of any of claims 1 to 9, further comprising the steps of:
computing a resource allocation table which comprises information about the sharing of resources among different slaves and different traffic classes,
distributing the resources between the different slaves,
wherein preferably additional information is taken into account, for example information about the link quality and/or information about the topology of the communication system.

11. Method of any of claims 1 to 10, further comprising the step of configuring means for performing the coordination of channel access, preferably for configuring a traffic classification or configuring the scheduling algorithm.

12. Method of any of claims 1 to 11, wherein the access technology is based on the IEEE 802.11 standard and preferably further comprising the step of:
switching off a carrier-sense mechanism of the IEEE 802.11 standard.

13. Apparatus for coordinating channel access in a communication system using a respective access technology, preferably a wireless communication system, preferably using a method according to any one of claims 1 to 12, wherein said apparatus being implemented as a master comprises:
(a) collecting means for collecting a traffic demand of at least one slave as well as additional scheduling relevant information and
(b) assigning means for assigning transmission opportunities for said at least one slave,
wherein a token is used for coordinating a channel access.

14. Apparatus for coordinating channel access in a communication system using a respective access technology, preferably a wireless communication system, preferably using a method according to any one of claims 1 to 12, wherein said apparatus being implemented as a slave comprises:
(a) controlling means for receiving a request from a master and sending a traffic demand as well as additional scheduling relevant information to the master and
(b) transmitting means for transmitting data in correspondence to transmission opportunities received from said master,
wherein a token is used for coordinating a channel access.

15. System, comprising an apparatus acting as a master as defined in claim 13 and at least one apparatus acting as a slave as defined in claim 14.
